Europäisches Patentamt

European Patent Office

Office européen des brevets

(19)

(11) Veröffentlichungsnummer: **0 100 953**

**B1**

# (12) EUROPÄISCHE PATENTSCHRIFT

(45) Veröffentlichungstag der Patentschrift:
15.01.86

(21) Anmeldenummer: 83107273.1

(22) Anmeldetag: 25.07.83

(51) Int. Cl.⁴: **C 02 F 11/04**, C 02 F 11/02, B 05 B 1/26, C 02 F 3/28

(54) Festbettreaktor zur Behandlung, insbesondere zur anaeroben Behandlung, von Klärschlamm oder mit organischen Stoffen stark belasteten Flüssigkeiten.

(30) Priorität: 06.08.82 CH 4744/82

(43) Veröffentlichungstag der Anmeldung:
22.02.84 Patentblatt 84/8

(45) Bekanntmachung des Hinweises auf die Patenterteilung:
15.01.86 Patentblatt 86/3

(84) Benannte Vertragsstaaten:
AT BE CH DE FR GB IT LI LU NL SE

(56) Entgegenhaltungen:
DE-A-2 420 745
FR-A-1 590 954
GB-A-2 068 929
US-A-1 674 480
US-A-2 188 162
US-A-3 189 283

(73) Patentinhaber: UTB Umwelttechnik Buchs AG,
Rheinstrasse 14b, CH- 9470 Buchs/SG (CH)

(72) Erfinder: Görlich, Lothar, Osnabrücker Strasse 37,
D-4503 Dissen (DE)

(74) Vertreter: Riederer, Conrad A., Dr.,
Bahnhofstrasse 10, CH- 7310 Bad Ragaz (CH)

## Beschreibung

Die Erfindung betrifft ein Verfahren und eine Vorrichtung zur Behandlung, insbesondere zur anaeroben Behandlung, von Klärschlamm oder mit organischen Stoffen stark belasteten Flüssigkeiten.

Durch die US-A 2 188 162 ist ein Festbettreaktor zur Behandlung von Abwässern bekannt geworden, der eine Vielzahl von praktisch senkrecht angeordneten Kanälen aufweist, deren Wandungen als Siedlungsflächen für Mikroorganismen dienen. Die zitierte Literaturstelle beschreibt lediglich die Reinigung von kommunalen Abwässern durch den Abbau von gelösten organischen Stoffen mittels aerober Bakterien, nicht aber die Behandlung von Klärschlamm. Es wird ausdrücklich darauf hingewiesen, dass sich das Festbett immer unter dem Abwasserspiegel befindet. Bei der Würdigung dieser Literaturstelle wird in der DE-A 24 20 745 bemerkt, dass die Strömungsgeschwindigkeiten in den verschiedenen Röhren sehr unterschiedlich sind. Die Oberflächen der Röhren würden dabei nicht hinreichend gleichmässig zur Wirkung kommen, und es könnten sich auch tote Zonen bilden.

Die DE-A 24 20 745 schlägt daher Querverbindungen zwischen den einzelnen Kanälen vor. Dies hat aber den Nachteil, dass dadurch nicht nur die Konstruktion des Festbettes verteuert wird, sondern dass die Wirbelbildung innerhalb der einzelnen Kanäle begünstigt wird. Eine solche Wirbelbildung ist jedoch für die Verwendung des Festbettreaktors in einer anaeroben Stufe zur Behandlung von Klärschlamm nicht erwünscht, weil dadurch die Wirksamkeit der Bakterien beeinträchtigt wird. In dieser Hinsicht kann auf die Publikation von C. F. Seyfried und M. Saake, "Abwasser und Schlammbehandlung, Fortschritte und Probleme", 15. Essener Tagung vom 10. bis 12. März 1982, hingewiesen werden. Dort wird ausdrücklich gefordert, dass der Klärschlamm in einem Festbettreaktor eine möglichst geringe Umwälzung erfährt, weil acetogene und methanogene Bakterien in enger Symbiose existieren und daher sehr scherkraftempfindlich sind.

Die GB-A 2 069 929 zeigt einen anaerobischen Filter, bei dem Abwasser mittels eines Verteilers über ein Festbett bestehend aus Kunststoffringen oder alten Aluminiumbüchsen geleitet wird. Die Flüssigkeit tropft dann durch das Festbett hinunter und wird dann wieder rezirkuliert. Ein solcher Festbettreaktor hat jedoch den Nachteil, dass er insbesondere bei der in der betreffenden Literaturstelle nicht vorgesehenen Verwendung für den von Natur aus heterogen gearteten Klärschlamm rasch zu Verstopfung neigt. Wenn aber auch nur Teile des Reaktors verstopft sind, führt dies zu einer Verminderung des wirksamen Volumens und dementsprechend muss sicherheitshalber eine lange Behandlungszeit vorgesehen werden. Nun ist es aber gerade das Ziel der Festbettreaktoren, die Behandlungszeit durch Schaffung grosser belebter Oberflächen zu verkürzen.

für Rieseltürme von Kläranlagen. Diese Einsätze haben bienenwabenförmigen Querschnitt. Sie bilden also eine Anzahl von hexagonalen Kanälen an deren Wandungen Abwasser zur aeroben Behandlung in Form eines Rieselfilmes hinunterfliessen kann.

Die US-A 3 189 283 beschreibt eine Verteileinrichtung zur Verteilung von Abwasser über ein Filterbett. Die Verteileinrichtung besteht im wesentlichen aus einer Düse und einem Prallteller, welcher das Abwasser über eine grössere Fläche verteilt.

Zusammenfassend kann festgestellt werden, dass alle genannten Literaturstellen lediglich die biologische Reinigung von Abwasser, also einer Newtonschen Flüssigkeit, betreffen, nicht aber die Behandlung von Klärschlamm, der eine nicht-Newtonsche Flüssigkeit darstellt. Sie geben daher keine Hinweise wie Klärschlamm, welcher erheblich andere Eigenschaften als kommunale Abwässer aufweist, zu behandeln ist.

Es ist Aufgabe der Erfindung, ein Verfahren zur Behandlung von Klärschlamm oder mit organischen Stoffen stark belasteten Flüssigkeiten zu schaffen, das eine hohe Betriebssicherheit aufweist und ohne grössere Unterhaltsarbeiten die Behandlung innerhalb einer relativ kurzen Zeit erlaubt.

Gemäss der Erfindung wird dies dadurch erreicht, dass ein Festbettreaktor verwendet wird, der eine Vielzahl von praktisch senkrecht angeordneten Kanälen aufweist, deren Wandungen als Siedlungsflächen für Mikroorganismen dienen, sowie eine Verteileinrichtung, welche die einzelnen Kanäle gleichmässig mit Klärschlamm oder mit organischen Stoffen stark belasteter Flüssigkeit beschickt, und dass der Füllpegel des Festbettreaktors derart gesteuert wird, dass die einzelnen Kanäle nicht bis oben gefüllt sind. Durch dieses Verfahren werden klar definierte Strömungsverhältnisse erreicht, die einer durch Ablagerungen bewirkten Querschnittsverminderung oder Verstopfung entgegenwirken. Dennoch bilden die Wandungen der einzelnen Kanäle grosse Siedlungsflächen für Mikroorganismen, so dass ein rascher Abbau der im Klärschlamm oder der Flüssigkeit enthaltenen Substanz erfolgt. Die einzelnen Kanäle sind während des Betriebs in der Regel leicht zu überwachen, so dass bei einer dennoch eintretenden Verstopfung eines Kanals rasch zweckdienliche Massnahmen zu dessen Freilegung unternommen werden können. Ein wichtiger Vorteil des erfindungsgemässen Verfahrens besteht auch darin, dass die Querschnittsverminderung in einem Kanal sich nicht auf den übrigen Teil des Reaktors schädigend auswirken kann. Es ist somit nicht mit Durchflusstörungen zu rechnen, wie sie bisher bei den üblichen Festbettreaktoren mit Kunststoffringen oder ähnlichem Füllmaterial bereits bei der relativ unkritischen Verwendung zur blossen Abwasserreinigung auftraten. Da erfindungsgemäss der Füllpegel des Reaktors derart gesteuert wird, dass die einzelnen Kanäle nicht bis oben gefüllt sind, wird bei einer Verstopfung eines Kanals dieser mehr gefüllt als die übrigen Kanäle, so dass in diesem Kanal ein hydrostatischer Druck entsteht, der die Tendenz hat, den Kanal freizulegen. Wenn diese Freilegung nicht automatisch im Betrieb erfolgt, so kann der hydrostatische Druck im verstopften Kanal noch weiter erhöht werden, indem durch Abpumpen das Flüssigkeitsniveau im Reaktor gesenkt wird. Wenn dafür gesorgt wird, dass die Verteilvorrichtung bei niedrigem Flüssigkeitsniveau weiter in Betrieb bleibt, so erfolgt ein Spülvorgang, bei dem die Wandungen der Kanäle gewaschen werden. Auch dadurch kann einer Verstopfung vorgebeugt werden. Es hat sich aber in der Praxis gezeigt, dass auch ohne eine solche Niveauabsenkung kaum eine Verstopfungsgefahr besteht, wenn der Querschnitt der Kanäle richtig dimensioniert und auch der Füllpegel des Reaktors richtig gewählt wird.

Die Erfindung betrifft auch eine Vorrichtung zur Durchführung des Verfahrens. Diese Vorrichtung ist gekennzeichnet durch eine Dosierpumpe zur Zuführung von Klärschlamm oder mit organischen Stoffen stark belasteter Flüssigkeit und einer Steuereinrichtung mit einem Sensor, z.B. einem Manometer, zur Steuerung der Dosierpumpe. Diese Vorrichtung ermöglicht mit einfachen Mitteln die Durchführung des erfindungsgemässen Verfahrens. Zweckmässigerweise ist auch eine Entnahmepumpe vorgesehen, welche ebenfalls von der Steuereinrichtung gesteuert wird. Die Dosier- und die Entnahmepumpe besitzen vorteilhaft das gleiche Fördervolumen pro Zeiteinheit. Dies hat den Vorteil, dass bei gleichzeitiger Betätigung von Dosier- und Entnahmepumpe der Füllpegel konstant gehalten wird.

Die Erfindung betrifft ferner auch die Anwendung des Verfahrens als Stufe in einem mehrstufigen Behandlungsverfahren für Klärschlamm oder mit organischen Stoffen hochbelasteten Flüssigkeiten. Für diese Anwendung ist das erfindungsgemässe Verfahren besonders gut geeignet, weil bei diesem keine hohen Scherkräfte im Klärschlamm auftreten, welche die dort ablaufenden biochemischen Vorgänge stören könnten. Als besonders vorteilhaft erweist sich die Anwendung des Verfahrens bei der Versäuerung. Der für die Versäuerung benötigte Festbettreaktor kann eine kleine Dimensionierung aufweisen, was es sogar möglich macht, den Versäuerungsreaktor in einem bestehenden Faulturm einzubauen, wo er bloss einen kleinen Bruchteil des Faulturmvolumens beansprucht. Das erfindungsgemässe Verfahren lässt sich aber auch bei der acetogenen oder methanogenen Behandlung von Klärschlamm einsetzen. Seine Anwendung ist aber nicht auf anaerobe Verfahren beschränkt sondern eignet sich auch für aerobe Verfahren, wie beispielsweise das sogenannte "AEROTHERM-Verfahren", das in der EP-A 0 053 777 beschrieben ist.

Ausführungsbeispiele der Erfindung werden nun unter Bezugnahme auf die Zeichnung beschrieben. Es zeigt:

Fig 1. ein erstes Ausführungsbeispiel eines Festbettreaktors im Schnitt, wobei jedoch das Rohrbündel nicht geschnitten ist,

Fig. 2 einen Schnitt durch den Festbettreaktor entlang der Linie II—II von Figur 1,

Fig. 3 eine Seitenansicht der Verteileinrichtung.

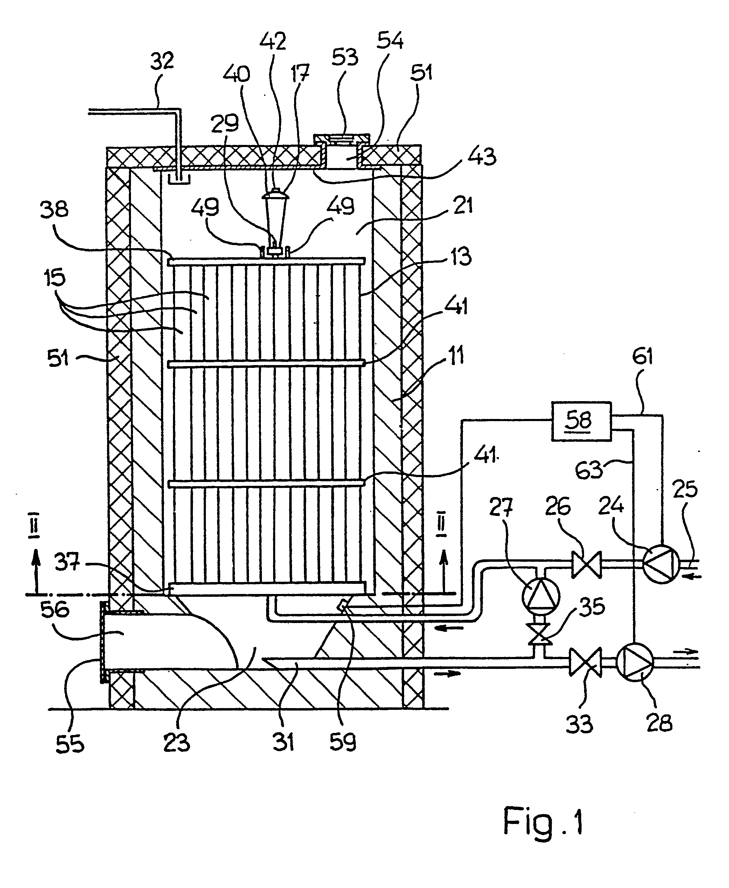

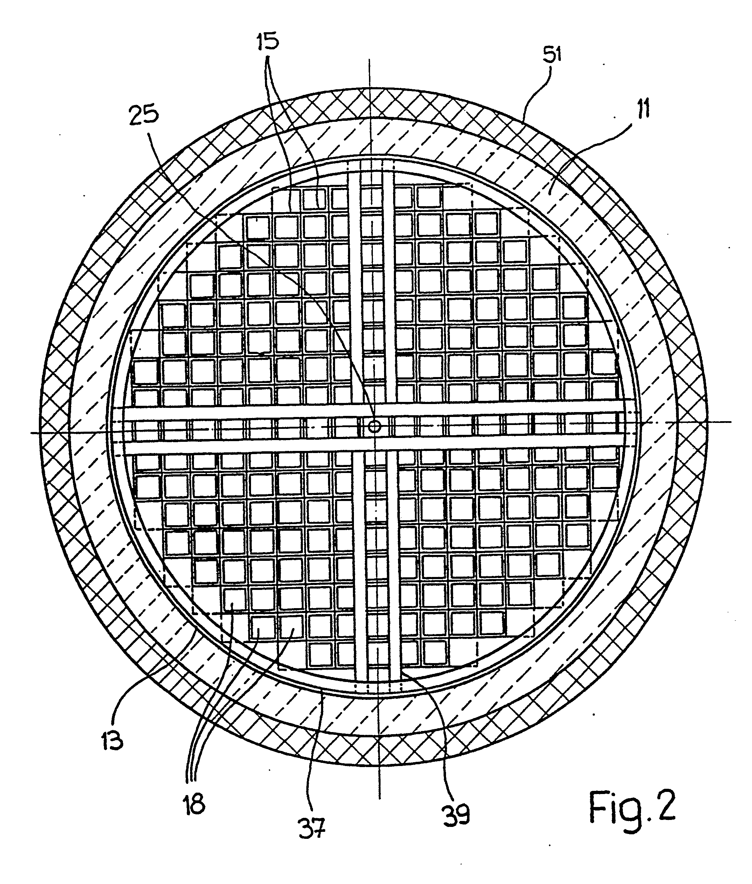

Das in den Figuren 1 bis 3 gezeigte Ausführungsbeispiel eines Festbettreaktors eignet sich insbesondere zur anaeroben Behandlung von Klärschlamm oder mit organischen Stoffen stark belasteten Flüssigkeiten. Er kann als Versäuerungsreaktor, Acetatreaktor und/oder Methanreaktor verwendet werden. Wie Figur 1 zeigt, besteht der Festbettreaktor im wesentlichen aus einem Behälter 11, in welchem ein Rohrbündel 13 angeordnet ist, dessen Rohre 15 durch eine Verteileinrichtung 17 mit Klärschlamm oder mit organischen Stoffen stark belasteten Flüssigkeiten beschickt werden. Die Rohre 15 bilden eine Vielzahl von Kanälen 18 (Fig. 2), welche einen vorbestimmten Querschnitt aufweisen. Die Wandungen dieser Kanäle 18 dienen als Siedlungsflächen für Mikroorganismen. Die Rohre 15 und somit auch die durch sie gebildeten Kanäle 18 sind beim gezeigten Ausführungsbeispiel praktisch senkrecht im Reaktor angeordnet. Ueber den oberen Enden der Kanäle 18 befindet sich der obere Raum 21 und unter den unteren Enden der Kanäle 18 der untere Raum 23. Die Zuleitung 25 für den Klärschlamm führt über die Dosierpumpe 24 und das Ventil 26 zur Düse 29 der Verteileinrichtung 17. Die Ableitung 31 führt vom unteren Raum 23 zum Ventil 33, zur Entnahmepumpe 28 und von dort zu einem weiteren Teil der Schlammbehandlungsanlage. Um eine Umwälzung des Reaktorinhaltz zu ermöglichen, verbindet das Ventil 35 die Leitung 31 über die Umwälzpumpe 27 mit der Zuleitung 25. Nach dem Schliessen der Ventil 26 und 33 kann somit der Inhalt des Reaktors mit der Umwälzpumpe 27 umgewälzt werden. Das bei der biochemischen Reaktion gegebenenfalls entstehende Gas kann über den Gasabzug 32 abgeleitet werden.

Betrachtet man nun das Rohrbündel 13 gemäss den Figuren 1 und 2, so ist ersichtlich, dass es beim gezeigten Ausführungsbeispiel aus den Rohren 15 mit viereckigem Querschnitt besteht. Dabei handelt es sich vorteilhaft um Kunststoffrohre mit einem Querschnitt von mehr als 30 cm². Der Querschnitt ist weitgehend abhängig von der Korngrösse der im Klärschlamm enthaltenen Stoffe. Als vorteilhaft erwies sich beim üblichen Klärschlamm ein Querschnitt von 64 cm². Statt viereckige Rohre könnten natürlich auch runde oder vieleckige Rohre verwendet werden. Viereckige Rohre sind aber im Handel zu relativ günstigen Preisen erhältlich. Sechseckige Rohre wären vom Materialverbrauch her besonders günstig, bieten aber etwas weniger Siedlungsfläche als viereckige Rohre. Die Rohre bestehen vorteilhaft aus PVC oder Polyester und können einen hohen Altmaterial- und Kreideanteil aufweisen, da sie keinen besonderen hydraulischen und mechanischen Beanspruchungen ausgesetzt sind. Dies ermöglicht eine billige und auch relativ leichte Konstruktion und bietet keine Korrosionsprobleme. Bei grossen Reaktoren kann dass Rohrbündel aus mehreren Teilen bestehen.

Wie die Zeichnung zeigt, weist das Rohrbündel 13 am oberen und unteren Rand einen Ring 37 und 38 aus einem L-Profil auf. Wie aus Figur 2 ersichtlich, ist der Ring 37 durch ein Verstärkungskreuz 39, das aus T-Profilen gebildet ist, verstärkt. Das Rohrbündel ist ferner für die einfache Montage in Abständen vom oberen und unteren Rand mit ringförmigen Bändern 41 verstärkt. Die Ringe 37, 38, das Verstärkungskreuz 39 und die Bänder 41 bestehen zweckmässigerweise aus korrosionsfestem Stahl oder Stahl mit einer korrosionsschutzbietenden Beschichtung. Im übrigen tragen sich die Rohre 15 durch die gewählte Konstruktion selbst. Das Rohrbündel 13 besitzt eine dem Reaktorbehälter 11 angepasste Form. Bei Grossanlagen sind vorteilhaft Rohrbündelmodule vorhanden, wobei jedes Modul so bemessen wird, dass es leicht transportiert und montiert werden kann.

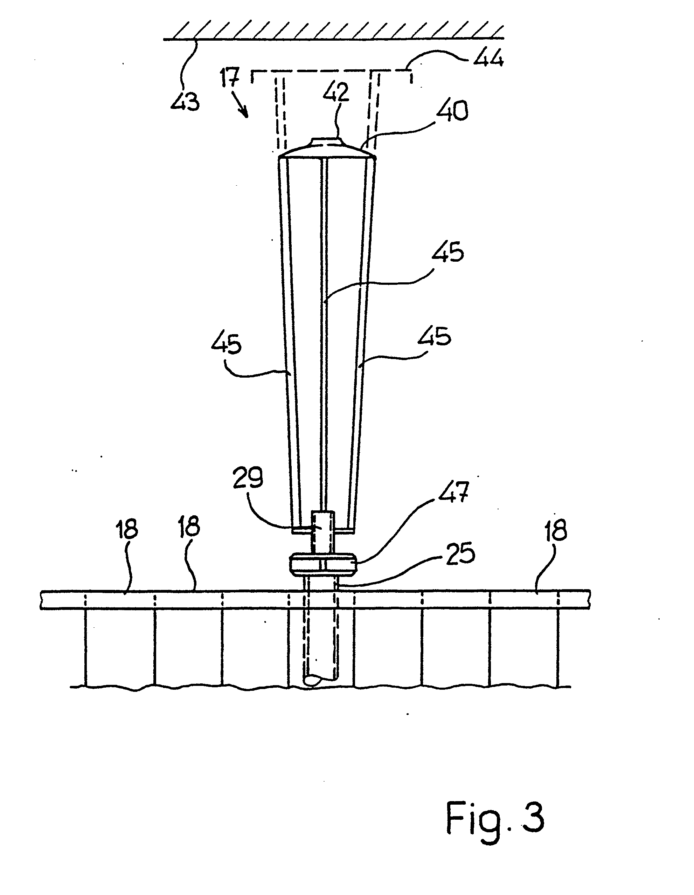

Die in den Figuren 1 und 3 ersichtliche Verteileinrichtung 17 besitzt eine am Ende der Zuleitung 25 angeordnete Düse 29. In einem Abstand von dieser Düse 29, der vorteilhaft verstellbar ist, ist ein Prallteller 40 angeordnet, der dazu dient, den aus der Düse 29 austretenden Strahl gleichmässig über die oberen Oeffnungen der Kanäle 18 zu verteilen. Der Prallteller 40 weist eine zentrale Oeffnung 42 auf, die in einem vorbestimmten Abstand vom Dach 43 des Reaktorbehälters 11 angeordnet ist. Es ist aber auch möglich, über dem Prallteller 40 einen weiteren Prallteller 44 vorzusehen, in welchem Falle der Abstand des Pralltellers 40 vom Dach 43 unkritisch ist. Im Betrieb wird ein Teil des aus der Düse 29 austretenden Strahles vom Prallteller 40 abgelenkt, während ein anderer Teil des Strahles durch die Oeffnung 42 durchtritt und an die Unterseite des Daches 43 oder an den Prallteller 44 aufschlägt und von dort insbesondere in die Kanäle 18 des zentralen Bereichs des Rohrbündels 13 tropft. Wie Figur 3 zeigt, wird der Prallteller 40 sowie ein eventuell vorgesehener zweiter Prallteller 44 durch Stäbe 45 getragen, die konisch von der Düse 27 her zur Peripherie des Pralltellers 40 laufen. Diese Anordnung hat sich als sehr betriebssicher erwiesen, weil faseriges Material zur Düse 29 hinunterrutschen kann, wenn aus dieser kein Strahl austritt. Sobald wieder ein Strahl aus der Düse 29 tritt, wird das faserige Material weggeschleudert. Die Verteileinrichtung 17 bestehend aus Prallteller 40 und eventuell 44 und Düse 29 ist mit einer Verschraubung 47, z.B. einer sogenannten Milchrohrverschraubung, abnehmbar an der Zuleitung 25 befestigt. Es sind verschiedene Ausgestaltungen der Düse 29 möglich, so können beispielsweise Verstellmittel vorgesehen sind, z.B. eine Schraube, um die Distanz zwischen Düse 29 und Prallteller 40 zu verstellen und so eine Justage bei der Montage oder später im Betrieb zu ermöglichen.

Wie Figur 1 zeigt, sind am Rohrbündel 13 Aufhängeösen 49 angeordnet, welche es erlauben, das Rohrbündel 13 z.B. mit einem Kran in den fertigen Behälter 11 abzusenken oder diesem zu Unterhaltsarbeiten wieder zu entnehmen. Der Behälter 11 ist zweckmässigerweise mit einer thermischen Isolation 51 versehen und weist eine mit einem Schauglas 53 versehene Inspektionsöffnung 54 auf. Eine weitere Oeffnung 56 befindet sich am unteren Teil des Behälters und ist normalerweise durch den Deckel 55 verschlossen.

In Figur 1 ist eine Steuereinrichtung 58 vorgesehen, die an einen Sensor 59, z.B. ein Manometer, angeschlossen ist und dem Konstanthalten und/oder Verändern des Pegelstandes im Reaktor dient. Zu diesem Zwecke führen Steuerleitungen 61, 63 zur Dosierpumpe 24 und zur Entnahmepumpe 28. Wenn beide Pumpen 24, 28 das gleiche Fördervolumen pro Zeiteinheit haben und gleichzeitig arbeiten, so bleibt der Pegelstand im Reaktor grundsätzlich konstant. Bei einer unerwünschten Aenderung des Pegelstandes kann die Steuereinrichtung 58 eine Pumpe 24, 28 ein- oder abschalten. Die Steuereinrichtung 58 kann auch dazu dienen, einer Verstopfung vorzubeugen, indem sie in vorbestimmten Zeitabständen das Flüssigkeitsniveau im Reaktor absenkt und dann wieder erhöht.

**Patentansprüche**

1. Verfahren zur Behandlung von Klärschlamm oder mit organischen Stoffen stark belasteten Flüssigkeiten, dadurch gekennzeichnet, dass ein Festbettreaktor verwendet wird, der eine Vielzahl von praktisch senkrecht angeordneten Kanälen (18) aufweist, deren Wandungen als Siedlungsflächen für Mikroorganismen dienen, sowie eine Verteileinrichtung (17), welche die einzelnen Kanäle (18) gleichmässig mit Klärschlamm oder mit organischen Stoffen stark belasteter Flüssigkeit beschickt, und dass der Füllpegel des Festbettreaktors derart gesteuert wird, dass die einzelnen Kanäle (18) nicht bis oben gefüllt sind.

2. Verfahren nach Anspruch 1, dadurch gekennzeichnet, dass in vorbestimmten Zeitabständen das Flüssigkeitsniveau des Reaktors abgesenkt und dann wieder erhöht wird.

3. Vorrichtung zur Durchführung des Verfahrens nach Anspruch 1 oder 2, gekennzeichnet durch eine Dosierpumpe (25) zur Zuführung von Klärschlamm oder mit organischen Stoffen stark belasteter Flüssigkeit und einer Steuereinrichtung (58) mit einem Sensor (29), z.B. einem Manometer, zur Steuerung der Dosierpumpe (24).

4. Vorrichtung nach Anspruch 3, gekennzeichnet durch eine Entnahmepumpe (28), welche ebenfalls von der Steuereinrichtung (58) gesteuert ist.

5. Vorrichtung nach Anspruch 4, dadurch gekennzeichnet, dass die Dosier- und Entnahmepumpe (24, 28) das gleiche Fördervolumen pro Zeiteinheit besitzt.

6. Anwendung des Verfahrens nach Anspruch 1 oder 2 als Stufe in einem mehrstufigen Behandlungsverfahren für Klärschlamm oder mit organischen Stoffen hochbelasteten Flüssigkeiten.

7. Anwendung nach Anspruch 6 zur Versäuerung.

8. Anwendung nach Anspruch 6 zur acetogenen Behandlung.

9. Anwendung nach Anspruch 6 zur methanogenen Behandlung.

10. Anwendung nach Anspruch 6 zur gleichzeitigen acetogenen und methanogenen Behandlung.

11. Anwendung nach Anspruch 6 zur aerobischen Behandlung.

## Claims

1. Method of treating sewage sludge or liquids highly charged with organic substances, characterized in that a reactor is used, said reactor having a packing comprising a plurality of practically vertical ducts (18) with walls capable of being covered by microorganisms, and a distributing device (17) capable of providing the different ducts (18) evenly with sewage sludge, or liquid highly charged with organic substances, said method being further characterized in that the filling level of the reactor is controlled in such way that the different ducts (18) are not fully filled.

2. Method as claimed in claim 1, characterized in that in predetermined intervals the liquid level is lowered and then again increased.

3. Device for carrying out the method according to claim 1 or 2, characterized by a metering pump (24) for feeding of sewage sludge or liquid highly charged with organic substances, and a control device (58) with a sensor (29), e.g. a manometer, to control the metering pump (24).

4. Device as claimed in claim 3, characterized by a discharge pump (28) which is also controlled by the control device (58).

5. Device as claimed in claim 4, characterized in that the metering pump (24) and the discharge pump (28) have the same feed rate.

6. Application of the method according to claim 1 or 2 as a stage in a multistage method for treatment of sewage sludge or liquids highly charged with organic substances.

7. Application according to claim 6 for acidification.

8. Application according to claim 6 for acetogenic treatment.

9. Application according to claim 6 for methanogenic treatment.

10. Application according to claim 6 for simultaneous acetogenic and methanogenic treatment.

11. Application according to claim 6 for aerobic treatment.

## Revendications

1. — Procédé de traitement de boue d'épuration ou de liquides fortement chargés de matières organiques, caractérisé en ce qu'on utilise un réacteur à lit fixe qui présente une multiplicité de canaux (18) disposés pratiquement verticalement, dont les parois servent de surfaces de séjour pour des microorganismes, ainsi qu'un dispositif de répartition (17) qui garnit uniformément les canaux (18) de boue d'épuration ou de liquides fortement chargés de matières organiques, et en ce qu'on commande le niveau de remplissage du réacteur à lit fixe de façon que les divers canaux (18) ne soient pas remplis jusqu'en haut.

2. — Procédé suivant la revendication 1, caractérisé en ce qu'on abaisse et en ce qu'on élève de nouveau, à des intervalles de temps prédéterminés, le niveau du liquide du réacteur.

3. — Dispositif pour la mise en oeuvre du procédé suivant la revendication 1 ou 2, caractérisé par une pompe de dosage (24) pour l'amenée de boue d'épuration ou de liquide fortement chargé de matières organiques, et un dispositif de commande (58) avec un organe sensible (29), par exemple un manomètre, pour la commande de la pompe de dosage (24).

4. — Dispositif suivant la revendication 3, caractérisé par une pompe d'évacuation (28) qui est également commandée par le dispositif de commande (58).

5. — Dispositif suivant la revendication 4, caractérisé en ce que les pompes d'évacuation et de dosage (24, 28) ont le même débit volumique.

6. — Application du procédé suivant la revendication 1 ou 2, comme étape dans un procédé de traitement en plusieurs étapes, de boue d'épuration ou de liquides fortement chargés de matières organiques.

7. — Application suivant la revendication 6, à l'acidification.

8. — Application suivant la revendication 6, au traitement acétogénique.

9. — Application suivant la revendication 6, au traitement méthanogénique.

10. — Application suivant la revendication 6, aux traitements acétogénique et méthanogénique simultanés.

11. — Application suivant la revendication 6, au traitement aérobique.

0 100 953

Fig .1

1

Fig.2

Fig. 3